# EUROPEAN PATENT SPECIFICATION

(11) **EP 4 385 778 B1**
(45) Date of publication and mention of the grant of the patent: **02.12.2026**
(21) Application number: 23215126.6
(22) Date of filing: 08.12.2023
(51) Int. Cl.: B60K 1/00

(54) **DRIVING DEVICE**
ANTRIEBSVORRICHTUNG
DISPOSITIF D'ENTRAÎNEMENT

(30) Priority: 16.12.2022 JP 2022201388
(43) Date of publication of application: 19.06.2024
(73) Proprietor: TOYOTA JIDOSHA KABUSHIKI KAISHA, Toyota-shi, Aichi-ken, 471-8571 (JP)
(72) Inventor: NISHIDA, Takayuki, TOYOTA-SHI, AICHI-KEN, 471-8571 (JP); ICHIKAWA, Akitaka, TOYOTA-SHI, AICHI-KEN, 471-8571 (JP); ISHIURA, Kazuaki, TOYOTA-SHI, AICHI-KEN, 471-8571 (JP)
(74) Representative: Cabinet Beau de Loménie

(56) References cited:
- GB-A- 2 590 382
- US-A1- 2015 224 884
- US-B2- 10 744 863
- US-B2- 9 692 277

## Description

### BACKGROUND OF THE INVENTION

### 1. Field of the Invention

The technology of the present disclosure relates to a driving device.

### 2. Description of Related Art

US Patent No. 9,692,277 discloses a driving device that includes an electric motor that drives a wheel of a vehicle, a casing that accommodates the electric motor, an inverter body, and a cover that covers the inverter body. The driving device is fixed to a subframe of the vehicle via a bracket. UK Patent Application 2590382 discloses an electric drive unit having a gearbox, an electric motor mounted to the gearbox and configured to provide drive to the gearbox, and an inverter mounted to the gearbox. US Patent Application 2015/0224884 discloses an integrated drive assembly for an electric vehicle, where the power inverter enclosure is separated from the motor and the transmission, and where the power inverter enclosure is coupled to, and separated from, the motor via a plurality of inverter support members. US Patent No. 10,744,863 discloses a control device unit for an electrically driven vehicle that includes a first mounting part which is a mounting part of a power supply unit that supplies electric power to an electric motor, and a second mounting part which fixes the control device unit to an electric motor unit.

### SUMMARY OF THE INVENTION

In a vehicle, vibration is sometimes applied to a cover that covers an inverter body. In the driving device described above, since the inverter body is fixed to the cover, vibration applied to the cover is directly transmitted to the inverter body. The present disclosure provides a technology capable of reducing vibration transmitted to a high voltage component covered by a cover.

The invention relates to a driving device including an electric motor, a gear, a casing, a high voltage component, and a cover. The electric motor is configured to drive wheels of a vehicle. The gear is connected to the electric motor. The casing accommodates at least one of the electric motor and the gear. The high voltage component is fixed to a side wall of the casing from the outside of the casing and is electrically connected to the electric motor. The cover is fixed to the side wall of the casing from the outside of the casing and covers the high voltage component. In the driving device, the high voltage component is fixed to the side wall of the casing via a plurality of bolts and is not directly fixed to the cover. In the driving device, the cover is connected to a constituent member located outside the cover.

The casing may accommodate the electric motor and the gear.

The casing may have a first casing that accommodates the electric motor and a second casing that accommodates the gear.

The high voltage component, the electric motor, and the gear may be arranged in order of the high voltage component, the electric motor, and the gear along an axial direction parallel to a rotation axis of the electric motor.

The high-voltage component, the electric motor, and the gear may be arranged in order of the high voltage component, the gear, and the electric motor along an axial direction parallel to a rotation axis of the electric motor.

The constituent member may include at least one of a vehicle body of the vehicle, a member fixed to the vehicle body, and a vibration generating member, and the cover may be connected to the constituent member through a bracket.

The vehicle may include a subframe fixed to the vehicle body, and the constituent member may include a supporting mount provided in the subframe.

The vehicle may include a compressor for air conditioning, and the vibration generating member may include the compressor.

The vehicle may be a hybrid vehicle including an engine fixed to a vehicle body, and the electric motor and the engine may be arranged along an axial direction parallel to a rotation axis of the electric motor.

The side wall of the casing may extend in a direction intersecting with a rotation axis of the electric motor of the casing, and the constituent member may face an outer surface of the side wall.

The side wall of the casing may extend along a rotation axis of the electric motor of the casing and the constituent member may face an outer surface of the side wall.

The high voltage component may be an inverter or/and a DC/DC converter.

The high voltage component may be a component with an operating voltage range of above DC 60 V to DC 1500 V, or above AC 30 V to AC 1000 V in root mean square value.

In the vehicle described above, vibration of the constituent member located outside the cover is transmitted to the cover that covers the high voltage component. The high voltage component is fixed to the side wall of the casing from the outside of the casing. Therefore, the vibration transmitted from the constituent member to the cover is transmitted to the high voltage component through the side wall of the casing. Thus, with each aspect of the present disclosure, vibration transmitted from the constituent member to the high voltage component can be reduced compared to the technology of the related art in which vibration transmitted from the constituent member to the cover is directly transmitted to the high voltage component.

Details and further improvements in the technology of the present disclosure are described in the "DETAILED DESCRIPTION OF EMBODIMENTS".

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 illustrates a plan view of an electric vehicle 100 equipped with a driving device 10 of a first example;
FIG. 2 illustrates a cross-sectional view along line II-II of FIG. 1;
FIG. 3 illustrates a cross-sectional view similar to FIG. 2 of a driving device 10A of a second example;
FIG. 4 illustrates a plan view of a driving device 10B of a third example;
FIG. 5 illustrates a plan view of a driving device 10C of a fourth example; and
FIG. 6 illustrates a cross-sectional view similar to FIG. 2 of a driving device 10D of a fifth example.

### DETAILED DESCRIPTION OF EMBODIMENTS

In an embodiment of the present technology, the casing may accommodate the electric motor and the gear. However, in another embodiment, the casing may not accommodate the gear, for example.

In an embodiment of the present technology, the casing may include a first casing that accommodates the electric motor and a second casing that accommodates the gear. However, in another embodiment, for example, the first casing may accommodate the electric motor and the gear.

In an embodiment of the present technology, the high voltage component, the electric motor, and the gear may be arranged in this order along an axial direction parallel to a rotation axis of the electric motor. However, in another embodiment, the high voltage component, the electric motor, and the gear may be arranged in this order along the axial direction parallel to the rotation axis of the electric motor, or they may be arranged along the axial direction parallel to the rotation axis of the electric motor in order of the electric motor, the high voltage component, and the gear.

In an embodiment of the present technology, the constituent member may include at least one of a vehicle body of the vehicle, a member fixed to the vehicle body, and a vibration generating member. In this case, the cover may be connected to the constituent member via a bracket. With such a configuration, for example, it is possible to suppress transmission of vibrations, whether caused by traveling of the vehicle or originating from the vibration generating member, to the high voltage component through the bracket.

In an embodiment of the present technology, the vehicle may include a subframe fixed to the vehicle body, and the constituent member may include a supporting mount provided on the subframe. With such a configuration, it is possible to suppress transmission of vibration of the supporting mount provided on the subframe to the high voltage component through a bracket.

In an embodiment of the present technology, the vehicle may include a compressor for air conditioning, and the vibration generating member may be the compressor. With such a configuration, it is possible to suppress transmission of vibration of the compressor to the high voltage component through a bracket.

In an embodiment of the present technology, the vehicle may be a hybrid vehicle including an engine fixed to a vehicle body. In this case, the electric motor and the engine may be arranged along an axial direction parallel to a rotation axis of the electric motor. However, in another embodiment, the engine and the motor may be arranged along a direction orthogonal to the rotation axis of the electric motor.

In an embodiment of the present technology, the side wall of the casing may extend in a direction that intersects a rotation axis of the electric motor of the casing. In this case, the constituent member may face an outer surface of the side wall. However, in another embodiment, the side wall of the casing may extend along a rotation axis of the electric motor of the casing. In this case, the constituent member may face an outer surface of the side wall.

### First Example

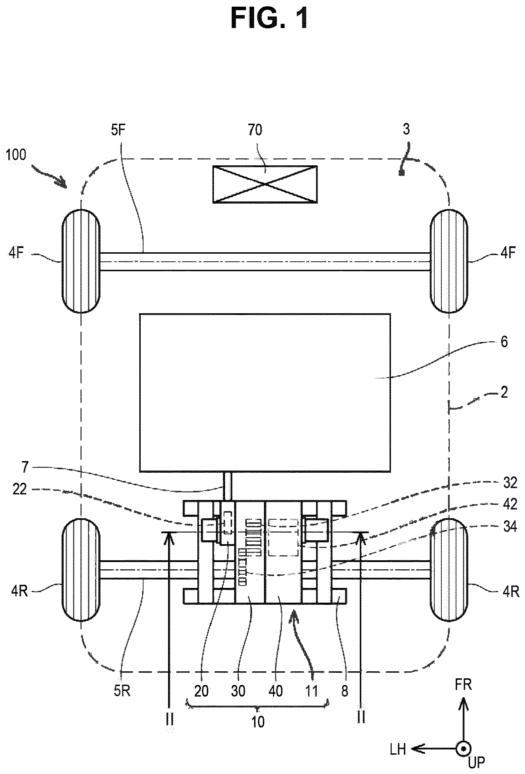

FIG. 1 illustrates a plan view of an electric vehicle 100 equipped with a driving device 10 of a first example. The electric vehicle 100 includes a vehicle body 2, a front drive shaft 5F, a pair of front wheels 4F, a rear drive shaft 5R, a pair of rear wheels 4R, a battery pack 6, a rear suspension member 8, and a compressor 70 in addition to the driving device 10. For easy understanding, FIG. 1 illustrates the vehicle body 2 of the electric vehicle 100 with a dashed line. The electric vehicle 100 in the present disclosure includes electric vehicles as well as fuel cell vehicles. In the coordinate system in the drawing, FR indicates the front of the electric vehicle 100, UP indicates the top of the electric vehicle 100, and LH indicates the left side of the electric vehicle 100. In the following, "up", "down", "left", "right", "front", and "rear" are described based on the coordinate system in the drawings.

One front wheel 4F is provided at one end of the front drive shaft 5F, and the other front wheel 4F is provided at the other end of the front drive shaft 5F. Also, one rear wheel 4R is provided at one end of the rear drive shaft 5R, and the other rear wheel 4R is provided at the other end of the rear drive shaft 5R.

The driving device 10 is located below a rear seat (not illustrated) of the electric vehicle 100 and above the rear suspension member 8. In a modification example, the driving device 10 may be located below a board forming a bottom surface of a luggage space of the electric vehicle 100. The driving device 10 drives the rear wheels 4R via the rear drive shaft 5R of the electric vehicle 100. The driving device 10 includes a casing 11, an inverter unit 20, a gear unit 30, and a motor unit 40. The inverter unit 20 has an inverter 22. The gear unit 30 has a link gear 32, a counter gear 33, and a differential gear 34. The motor unit 40 has a motor 42.

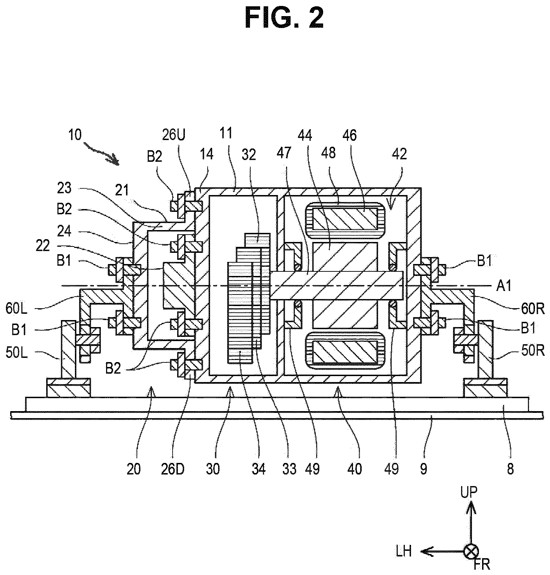

The battery pack 6 is arranged below a floor panel 9 (see FIG. 2) of the electric vehicle 100. The battery pack 6 supplies electric power to the driving device 10. Thereby, the driving device 10 drives the rear wheels 4R. The driving device 10 also functions as a generator. The battery pack 6 stores electric power supplied from the driving device 10. The inverter 22 is connected to the battery pack 6 by a power cable 7. The inverter 22 converts direct current power of the battery pack 6 into alternating current power suitable for driving the motor 42. Thus, the inverter 22 is a high voltage component to which high voltage power is applied. Here, the term "high voltage" refers to an operating voltage range of above DC 60 V to DC 1500 V, or above AC 30 V (root mean square value) to AC 1000 V (root mean square value). A "high voltage component" in the present disclosure may typically be a component that is electrically connected to the motor 42 and has a function of controlling electric power supplied to the motor 42. In this case, a cable connected to the motor 42 does not correspond to the "high voltage component". In a modification example, the driving device 10 may incorporate a DC/DC converter that boosts the direct current power of the battery pack 6 instead of, or in addition to, the inverter 22, for example.

The compressor 70 is located in a front component 3 of the electric vehicle 100. The compressor 70 is an air-conditioning compressor that adjusts the temperature of a vehicle cabin of the electric vehicle 100.

An internal structure of the driving device 10 will be described with reference to FIG. 2. The casing 11 of the driving device 10 is a rectangular box and forms a space for accommodating the motor 42 and a space for accommodating the link gear 32, the counter gear 33, and the differential gear 34 of the gear unit 30. The casing 11 has a left side wall 14 at a left end. The left side wall 14 is an outer wall that separates the inside and outside of the casing 11 and extends in the vertical direction. The driving device 10 is fixed to the rear suspension member 8 via a pair of brackets 60L, 60R and a pair of supporting mounts 50L, 50R. The rear suspension member 8 is fixed to an upper surface of the floor panel 9 of the vehicle body 2 of the electric vehicle 100. The rear suspension member 8 is a subframe of the electric vehicle 100 formed by combining a plurality of frames. The supporting mounts 50L, 50R are members provided on the rear suspension member 8. The supporting mount 50L is a member that connects the rear suspension member 8 and the bracket 60L. The supporting mount 50R is a member that connects the rear suspension member 8 and the bracket 60R. The brackets 60L, 60R have symmetrical shapes with respect to each other. Similarly, the supporting mounts 50L, 50R have symmetrical shapes with respect to each other. This description will primarily focus on the structures of the left bracket 60L and the supporting mount 50L among these components.

The motor 42 inside the casing 11 is a so-called electric motor, and includes a rotor 44 and a stator core 46. The rotor 44 extends in the right and left direction along a rotation axis A1 of the motor 42. The rotor 44 is made of a magnetic material and accommodates a permanent magnet (not illustrated) inside. The rotor 44 has a motor shaft 47 extending in an axial direction (that is, right and left direction) parallel to the rotation axis A1. The motor shaft 47 is rotatably supported by the casing 11 via a pair of bearings 49.

Also, as illustrated in FIG. 2, in the driving device 10, the inverter unit 20, the gear unit 30, and the motor unit 40 are arranged in this order from the left side along an axial direction parallel to the rotation axis A1. Further, the gear unit 30 is located between the motor 42 and the inverter 22. In a modification example, a cooling unit which supplies, to the inverter unit 20, a heat transfer medium for cooling the inverter 22 of the inverter unit 20 may be interposed between the inverter unit 20 and the gear unit 30. That is, in a modification example, in addition to the units 20, 30, and 40, other members may be arranged between the units 20, 30, and 40.

By arranging the units 20, 30, and 40 in the right and left direction in this way, for example, the size of the driving device 10 in the vertical direction can be reduced compared to a configuration in which the units 20, 30, and 40 are arranged in the vertical direction, respectively. Thereby, the cabin space of the electric vehicle 100 can be enlarged. Also, the left side wall 14 extends in a direction intersecting with the rotation axis A1.

The stator core 46 has a cylindrical shape and extends in the right and left direction along the rotation axis A1. The stator core 46 is located radially outside the rotor 44. A gap is provided between the stator core 46 and the rotor 44. The stator core 46 is made of a magnetic material. A stator coil 48 is provided on the stator core 46. The stator coil 48 is made of a conductive body and wound around an outer surface of the stator core 46. The stator coil 48 of the motor unit 40 is electrically connected to the inverter 22 of the inverter unit 20. When the electric power of the battery pack 6 is supplied to the stator coil 48 through the inverter 22, a magnetic force is generated between the stator coil 48 and the rotor 44. This causes the rotor 44 to rotate around the rotation axis A1.

The motor shaft 47 extends leftward from the motor unit 40 until it reaches the link gear 32 of the gear unit 30. The motor shaft 47 is connected to the link gear 32 of the gear unit 30. That is, the motor 42 is mechanically connected to the link gear 32 via the motor shaft 47. Thereby, rotation of the rotor 44 of the motor 42 is transmitted to the link gear 32. The link gear 32 meshes with the counter gear 33. The counter gear 33 meshes with the differential gear 34. That is, the link gear 32 is mechanically connected to the differential gear 34 via the counter gear 33. The differential gear 34 is mechanically connected to the rear drive shaft 5R. Thereby, the rotation of the link gear 32 is transmitted to the rear drive shaft 5R via the counter gear 33 and the differential gear 34. Thus, the motor 42 drives the rear wheels 4R through the three gears 32, 33, and 34 of the gear unit 30. In a modification example, the gear unit 30 may not include the counter gear 33, for example. In this case, the link gear 32 and the differential gear 34 may mesh directly.

The inverter unit 20 includes a cover 21 in addition to the inverter 22. The inverter 22 includes a plurality of switching elements. The inverter 22 is fixed to the left side wall 14 of the casing 11 with a plurality of bolts B2 from the left side of the casing 11. The inverter 22 is fixed to the left side wall 14 of the casing 11 from the outside of the casing 11.

The cover 21 of the inverter unit 20 has a box shape with an open right side. The cover 21 includes an end wall 24, an annular wall 23, and a pair of flanges 26U, 26D. An outer peripheral edge of the end wall 24 extending in the vertical direction is connected to the flanges 26U, 26D by the annular wall 23 extending in the right and left direction. After the inverter 22 is fixed to the left side wall 14 of the casing 11, the cover 21 is fixed to the left side wall 14 around the left side of the inverter 22. As a result, the cover 21 covers the inverter 22 from the left side. The inverter 22 is fixed to the left side wall 14 of the casing 11 via the flanges 26U, 26D and the bolts B2 from the left side of the casing 11. The casing 11 may further accommodate a smoothing capacitor for smoothing the output of the inverter 22 and/or a filter for suppressing noise from occurring in the input of the inverter 22.

The bracket 60L is fixed to the end wall 24 of the cover 21 with a plurality of bolts B1. The bracket 60L includes a fixing portion that abuts the end wall 24 of the cover 21, and a body portion bent into an L shape. A boss of the supporting mount 50L is inserted into a lower end portion of the body portion of the bracket 60L. Thereby, the bracket 60L is fixed to the supporting mount 50L. As a result, as illustrated in FIG. 2, a left side surface of the left side wall 14 faces the supporting mount 50L. In a modification example, the bracket 60L may be fixed to the end wall 24 of the cover 21 with an adhesive or by welding.

As an example, when the electric vehicle 100 travels, the vehicle body 2 (for example, floor panel 9) vibrates. In this case, vibration of the floor panel 9 is transmitted to the driving device 10 via the rear suspension member 8, the supporting mounts 50L, 50R, and the brackets 60L, 60R. Here, in particular, it is required to reduce the vibration of the inverter 22, which is a high voltage component. The inverter 22 is covered with the cover 21, and the cover 21 is fixed to the rear suspension member 8 via the supporting mount 50L and the bracket 60L. Therefore, the vibration of the supporting mount 50L is transmitted through the bracket 60L to the cover 21 covering the inverter 22.

In the driving device 10, the inverter 22 is fixed to the left side wall 14 of the casing 11 from the outside of the casing 11. That is, the inverter 22 is not directly fixed to the cover 21 that covers the inverter 22. Therefore, even when vibration is transmitted from the supporting mount 50L to the cover 21, the vibration is not directly transmitted from the cover 21 to the inverter 22. The vibration is first transmitted to the left side wall 14 of the casing 11 and transmitted to the inverter 22 after being damped by the left side wall 14. Thus, according to the driving device 10 of the present embodiment, compared to the technology of the related art in which the inverter 22 is directly fixed to the cover 21, vibration transmitted from the supporting mount 50L to the inverter 22 can be reduced.

### Second Example

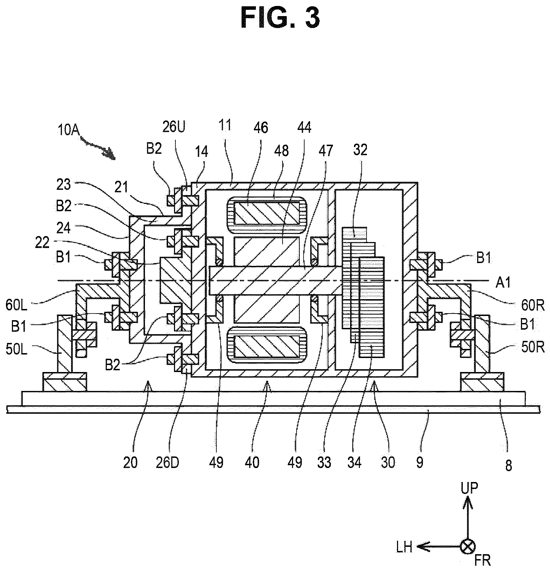

A driving device 10A of a second example will be described with reference to FIG. 3. The driving device 10A of the second example differs in the arrangement of the motor unit 40 and the gear unit 30 from the driving device 10 of the first example. Specifically, in the driving device 10A of the second example, the inverter unit 20, the motor unit 40, and the gear unit 30 are arranged in this order from the left side along an axial direction (that is, right and left direction) parallel to the rotation axis A1. Further, in the driving device 10A of the present example, the motor 42 is located between the gear unit 30 and the inverter 22. Also, in the driving device 10A of the present example, the inverter 22 is fixed to the left side wall 14 of the casing 11 from the outside of the casing 11. Therefore, similarly to the driving device 10 of the first example, vibration transmitted from the supporting mount 50L to the inverter 22 can be reduced. In the second example, in addition to the units 20, 30, and 40, it is possible to arrange other members between the units 20, 30, and 40, similar to the configuration described in the first example.

### Third Example

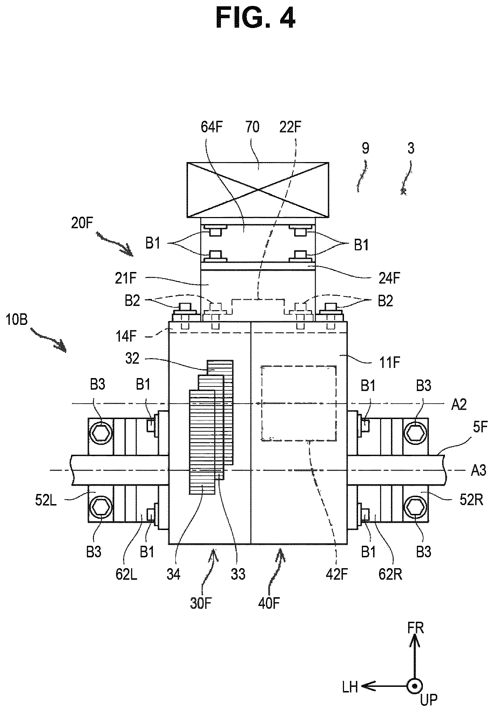

A driving device 10B of a third example will be described with reference to FIG. 4. FIG. 4 illustrates a plan view of the driving device 10B of the third example. The driving device 10B of the third example is arranged in a front component 3 (see FIG. 1) of an electric vehicle 100B unlike the driving device 10 of the first example. A driving device 10B of the third example includes a motor unit 40F and a gear unit 30F, and drives the front wheels 4F (see FIG. 1) via the front drive shaft 5F. The motor unit 40F has a motor 42F, and the gear unit 30F has a link gear 32F and a differential gear 34F. The structure of the motor unit 40F is similar to that of the motor unit 40 of the first example. The structure of the gear unit 30F is similar to that of the gear unit 30 of the first example.

The driving device 10B of the third example is fixed to a floor surface of the front component 3, that is, a floor panel 9C by a left mount 52L, a left bracket 62L, the bolts B1, and a plurality of bolts B3 from the left side. Further, the driving device 10B of the present example is fixed to the floor panel 9C by a right mount 52R, a right bracket 62R, the bolts B1, and the bolts B3 from the right side.

In the driving device 10B of the third example, an inverter unit 20F is arranged in front of the driving device 10B. That is, the inverter unit 20F is not arranged along an axial direction parallel to the motor unit 40F, the gear unit 30F, and a rotation axis A2 of the motor 42F. The inverter unit 20F is fixed by the bolts B2 to a front wall 14F of a casing 11F of the driving device 10B. The front wall 14F extends along the rotation axis A2 of the motor 42F, unlike the left side wall 14 of the first example.

Further, in the driving device 10B of the third example, unlike the driving device 10 of the first example described above, the front wall 14F is composed of a casing of the motor unit 40F and a casing of the gear unit 30F. Therefore, the inverter unit 20 is fixed to the front wall 14F across the motor unit 40F and the gear unit 30F.

Further, the compressor 70 is fixed to a cover 21F by a bracket 64F and the bolts B1. The compressor 70 is located in front of the driving device 10B. The compressor 70 faces a front surface of the front wall 14F.

The compressor 70 compresses and expands the heat medium by reciprocating a piston (not illustrated). Therefore, the compressor 70 is a vibration generating member that generates vibration when operated.

As illustrated in FIG. 4, in the driving device 10B of the present example, the compressor 70 is connected to the cover 21F via the bracket 64F. Therefore, the vibration of the compressor 70 is transmitted to the driving device 10B through the bracket 64F. However, in the driving device 10B, an inverter 22F of the inverter unit 20F is fixed not to the cover 21F but to the front wall 14F of the casing 11F by the bolts B2. Therefore, the vibration transmitted from the compressor 70 to the inverter 22F can be reduced compared to the technology of the related art in which the inverter 22F is fixed to the cover 21F. Also, by fixing the compressor 70 to the driving device 10B via the bracket 64F, it is possible to reduce restrictions on layout of devices accommodated in the front component 3.

### Fourth Example

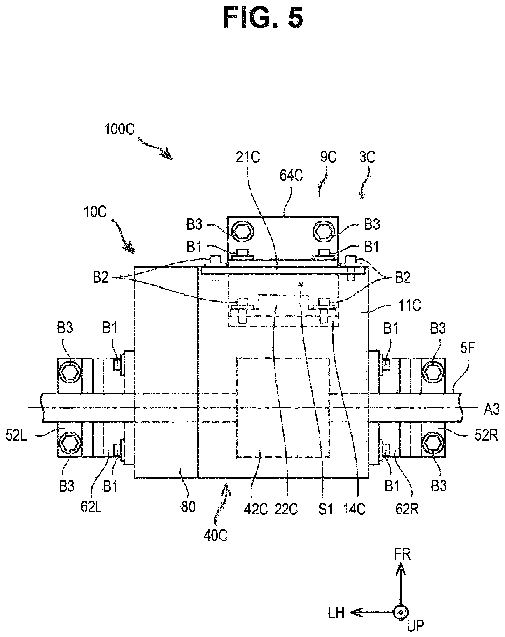

A driving device 10C of a fourth example will be described with reference to FIG. 5. The driving device 10C of the fourth example is arranged in a front component 3C of a hybrid vehicle 100C, unlike the driving devices 10, 10A, and 10B of the examples described above. The hybrid vehicle 100C includes an engine 80.

Also, unlike the driving device 10B of the third example, the driving device 10C of the present example does not have the gear unit 30F. Therefore, a motor 42C of a motor unit 40C is directly connected to the front drive shaft 5F inside a casing 11C. Further, the engine 80 is arranged on the left side of the driving device 10C. That is, the motor 42C and the engine 80 are arranged along an axial direction (that is, right and left direction) parallel to a rotation axis A3 of the motor 42C. In addition, in a modification example, a gear unit may be provided between the motor unit 40C and the engine 80.

Further, an accommodation space S1 is provided in a front part of the casing 11C of the driving device 10C of the present example. The accommodation space S1 is a recess provided in the front part of the casing 11C, and the front is open. A bottom wall 14C of the accommodation space S1 extends in the right and left direction along the rotation axis A3 of the motor 42C.

An inverter 22C is arranged in the accommodation space S1. The inverter 22C is fixed to the bottom wall 14C of the accommodation space S1 by the bolts B2 from the front side of the bottom wall 14C. Further, the cover 21C is fixed to a front surface of the casing 11C by the bolts B2. The cover 21C is a flat board member extending parallel to the bottom wall 14C of the accommodation space S1. The cover 21C is a lid that closes the accommodation space S1. The cover 21C covers the inverter 22C arranged in the accommodation space S1.

The cover 21C is fixed to a floor surface of the front component 3C, that is, a floor panel 9C via a bracket 64C. Further, the engine 80 is fixed to the floor panel 9C by a left bracket 62L the bolts B1, and the bolts B3 from the left side. The driving device 10C is fixed to the floor panel 9C by a right bracket 62R, the bolts B1, and the bolts B3 from the right side.

Thus, the driving device 10C of the present example is fixed to the floor panel 9C by a pair of brackets 62L, 62R in the right and left direction, and is fixed to the floor panel 9C by the bracket 64C from the front. Therefore, the driving device 10C is fixed to the floor panel 9C more firmly than in a configuration in which the driving device 10C is fixed only in the right and left direction.

Also, vibration of the floor panel 9C is transmitted to the cover 21C via the bracket 64C. However, in the driving device 10C, the inverter 22C is fixed not to the cover 21C but to the bottom wall 14C of the accommodation space S1 of the casing 11C by the bolts B2. Therefore, the vibration transmitted from the floor panel 9C to the inverter 22C can be reduced as compared with the technology of the related art in which the inverter 22C is fixed to the cover 21C. In the present example, the floor panel 9C is an example of a "constituent member".

### Fifth Example

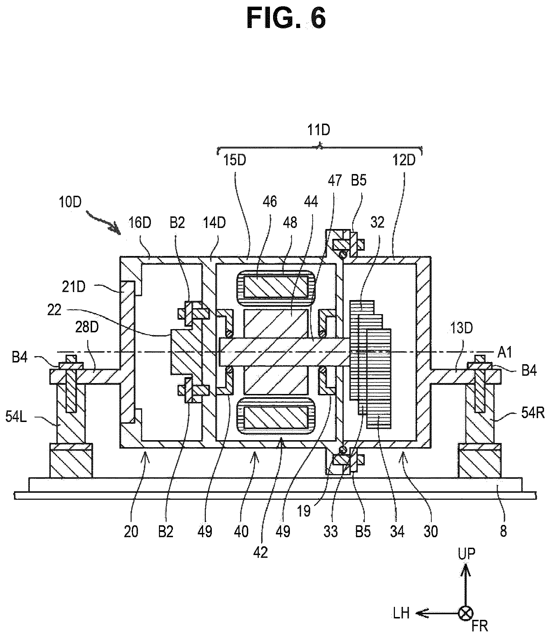

A driving device 10D of a fifth example will be described with reference to FIG. 6. The driving device 10D of the fifth example differs from the driving device 10A of the second example in the configuration of the casing 11D. The casing 11D of the driving device 10D of the present example has a motor casing 15D and a gear casing 12D. The motor casing 15D accommodates the motor 42. In addition to a left side wall 14D, the motor casing 15D further has an extension wall 16D extending leftward beyond the left side wall 14D. The extension wall 16D covers the inverter 22 of the inverter unit 20 from above and below. An opening 17D is provided at a left end of the motor casing 15D. The opening 17D allows communication between the inside of the casing 11D in which the inverter 22 is accommodated and the outside of the casing 11D.

The opening 17D of the motor casing 15D is covered with a cover 21D. That is, the cover 21D covers the inverter 22. The cover 21D has a seat portion 28D extending leftward. The seat portion 28D is fixed to a supporting mount 54L by bolts B4. Thus, the cover 21D of the present example is fixed to the supporting mount 54L via the seat portion 28D of the cover 21D. In a modification example, the cover 21D may be directly fixed to the supporting mount 54L or fixed to the vehicle body 2 without passing through the seat portion 28D.

The gear casing 12D is fixed to the motor casing 15D with a plurality of bolts B5. That is, the gear casing 12D and the motor casing 15D are fastened together. Further, a sealing member 19 is provided at the boundary between the casings 12D, 15D. The sealing member 19 may be, for example, an O-ring. By utilizing the sealing member 19 to seal a space inside the gear casing 12D, it is possible to prevent a lubricant used for smooth rotation of each of the gears 32, 33, and 34 from leaking out of the gear casing 12D. Thus, in the present example, the casing 11D is composed of two casings, the gear casing 12D and the motor casing 15D. That is, in the present example, the motor casing 15D is an example of the "first casing", and the gear casing 12D is an example of the "second casing". In a modification example, casings 12D, 15D may be fixed to each other with an adhesive or welded.

Like the cover 21D, the gear casing 12D also has a seat portion 13D. The seat portion 13D is fixed to the supporting mount 54R with the bolts B4. Also, in the driving device 10D of the present example, the inverter 22 is fixed to the left side wall 14D of the motor casing 15D from the outside. Therefore, similarly to the driving device 10 of the first example, vibration transmitted from the supporting mount 54L to the inverter 22 can be reduced.

Although specific examples according to the technology of the present disclosure are described above in detail, these are merely examples and do not limit the scope of the claims. The technology described in the claims includes various modifications and changes of the specific examples illustrated above.

The technical elements described in the present disclosure exhibit technical utility either alone or in various combinations. In addition, the technology exemplified in the present disclosure can achieve multiple purposes at the same time, and achieving one of them has technical utility in itself.

## Claims

1. A driving device (10) comprising:
an electric motor (42) configured to drive a wheel of a vehicle;
a gear (32) connected to the electric motor (42);
a casing (11) accommodating at least one of the electric motor (42) and the gear (32);
a high voltage component (22) fixed to a side wall of the casing (11) from outside of the casing (11) and electrically connected to the electric motor (42); and
a cover (21) fixed to the side wall of the casing (11) from outside of the casing (11) and covering the high voltage component (22), wherein
the cover (21) is configured to be connected to a constituent member located outside the cover (21),
the driving device (10) being **characterized in that** the high voltage component (22) is fixed to the side wall of the casing (11) via a plurality of bolts and is not directly fixed to the cover (21).

2. The driving device (10) according to claim 1, wherein the casing (11) accommodates the electric motor (42) and the gear (32).

3. The driving device (10) according to claim 1, wherein the casing (11) has a first casing that accommodates the electric motor (42) and a second casing that accommodates the gear (32).

4. The driving device (10) according to claim 2 or 3, wherein the electric motor (42) is located between the gear (32) and the high voltage component (22) along an axial direction parallel to a rotation axis of the electric motor (42).

5. The driving device (10) according to claim 2 or 3, wherein the gear (32) is located between the electric motor (42) and the high voltage component (22) along an axial direction parallel to a rotation axis of the electric motor (42).

6. The driving device (10) according to any one of claims 1 to 5, wherein the high voltage component (22) is an inverter or/and a DC/DC converter.

7. The driving device (10) according to any one of claims 1 to 6, wherein the high voltage component (22) is a component with an operating voltage range above DC 60 V to DC 1500 V, or above AC 30 V to AC 1000 V in root mean square value.

8. A vehicle comprising a driving device (10) according to any one of claims 1 to 7 and a constituent member to which the cover (21) is connected through a bracket (60L), wherein the constituent member includes at least one of a vehicle body of the vehicle, a member fixed to the vehicle body, and a vibration generating member.

9. The vehicle according to claim 8 further comprising a rear suspension member (8) to which the cover (21) is connected through the bracket (60L) and a supporting mount (50L) provided in the rear suspension member (8).

10. The vehicle according to claim 8 or 9 further comprising a compressor (70) for air conditioning to which the cover (21) is connected through the bracket (60L).

11. A vehicle comprising a driving device (10) according to any one of claims 1 to 7 and an engine (80), wherein the electric motor (42) and the engine (80) are arranged along an axial direction parallel to a rotation axis of the electric motor (42).

12. The vehicle according to any one of claims 8 to 10, wherein:
the side wall of the casing (11) extends in a direction intersecting with a rotation axis of the electric motor (42) of the casing (11); and
the constituent member faces an outer surface of the side wall.

13. The vehicle according to any one of claims 8 to 10, wherein:
the side wall of the casing (11) extends along a rotation axis of the electric motor (42) of the casing (11); and
the constituent member faces an outer surface of the side wall.

## Patentansprüche

1. Antriebsvorrichtung (10), die Folgendes umfasst:
einen Elektromotor (42), der dazu ausgelegt ist, ein Rad eines Fahrzeugs anzutreiben;
ein Getriebe (32), das mit dem Elektromotor (42) verbunden ist;
ein Gehäuse (11), in das mindestens eines des Elektromotors (42) und des Getriebes (32) aufgenommen ist;
eine Hochspannungskomponente (22), die von außerhalb des Gehäuses (11) an einer Seitenwand des Gehäuses (11) befestigt und elektrisch mit dem Elektromotor (42) verbunden ist; und
eine Abdeckung (21), die von außerhalb des Gehäuses (11) an der Seitenwand des Gehäuses (11) befestigt ist und die Hochspannungskomponente (22) abdeckt, wobei
die Abdeckung (21) dazu ausgelegt ist, mit einem konstituierenden Element, das sich außerhalb der Abdeckung (21) befindet, verbunden zu sein,
wobei die Antriebsvorrichtung (10) **dadurch gekennzeichnet ist, dass** die Hochspannungskomponente (22) via eine Vielzahl von Bolzen an der Seitenwand des Gehäuses (11) befestigt und nicht direkt an der Abdeckung (21) befestigt ist.

2. Antriebsvorrichtung (10) nach Anspruch 1, wobei in das Gehäuse (11) der Elektromotor (42) und das Getriebe (32) aufgenommen sind.

3. Antriebsvorrichtung (10) nach Anspruch 1, wobei das Gehäuse (11) ein erstes Gehäuse, in das der Elektromotor (42) aufgenommen ist, und ein zweites Gehäuse aufweist, in das das Getriebe (32) aufgenommen ist.

4. Antriebsvorrichtung (10) nach Anspruch 2 oder 3, wobei sich der Elektromotor (42) zwischen dem Getriebe (32) und der Hochspannungskomponente (22) entlang einer Axialrichtung parallel zu einer Rotationsachse des Elektromotors (42) befindet.

5. Antriebsvorrichtung (10) nach Anspruch 2 oder 3, wobei sich das Getriebe (32) zwischen dem Elektromotor (42) und der Hochspannungskomponente (22) entlang einer Axialrichtung parallel zu einer Rotationsachse des Elektromotors (42) befindet.

6. Antriebsvorrichtung (10) nach einem der Ansprüche 1 bis 5, wobei die Hochspannungskomponente (22) ein Wechselrichter oder/und ein DC/DC-Wandler ist.

7. Antriebsvorrichtung (10) nach einem der Ansprüche 1 bis 6, wobei die Hochspannungskomponente (22) eine Komponente mit einem Betriebsspannungsbereich über 60 VDC bis 1500 VDC oder über 30 VAC bis 1000 VAC als Effektivwert ist.

8. Fahrzeug, das eine Antriebsvorrichtung (10) nach einem der Ansprüche 1 bis 7 und ein konstituierendes Element umfasst, mit dem die Abdeckung (21) über eine Halterung (60L) verbunden ist, wobei das konstituierende Element mindestens eines von einer Fahrzeugkarosserie des Fahrzeugs, einem an der Fahrzeugkarosserie befestigten Element und einem Vibrationserzeugungselement beinhaltet.

9. Fahrzeug nach Anspruch 8, das ferner ein hinteres Aufhängungselement (8) umfasst, mit dem die Abdeckung (21) über die Halterung (60L) und einen Stützträger (50L), die im hinteren Aufhängungselement (8) bereitgestellt sind, verbunden ist.

10. Fahrzeug nach Anspruch 8 oder 9, das ferner einen Verdichter (70) für eine Klimaanlage umfasst, mit dem die Abdeckung (21) über die Halterung (60L) verbunden ist.

11. Fahrzeug, das eine Antriebsvorrichtung (10) nach einem der Ansprüche 1 bis 7 und einen Verbrennungsmotor (80) umfasst, wobei der Elektromotor (42) und der Verbrennungsmotor (80) entlang einer Axialrichtung parallel zu einer Rotationsachse des Elektromotors (42) angeordnet sind.

12. Fahrzeug nach einem der Ansprüche 8 bis 10, wobei:
die Seitenwand des Gehäuses (11) sich in eine Richtung erstreckt, die eine Rotationsachse des Elektromotors (42) des Gehäuses (11) schneidet; und
das konstituierende Element einer Außenfläche der Seitenwand zugewandt ist.

13. Fahrzeug nach einem der Ansprüche 8 bis 10, wobei:
die Seitenwand des Gehäuses (11) sich entlang einer Rotationsachse des Elektromotors (42) des Gehäuses (11) erstreckt; und
das konstituierende Element einer Außenfläche der Seitenwand zugewandt ist.

## Revendications

1. Dispositif d'entraînement (10) comprenant :
un moteur électrique (42) configuré pour entraîner une roue d'un véhicule ;
un engrenage (32) raccordé au moteur électrique (42) ;
un carter (11) logeant au moins l'un parmi le moteur électrique (42) et l'engrenage (32) ;
un composant haute tension (22) fixé sur une paroi latérale du carter (11) depuis l'extérieur du carter (11) et électriquement raccordé au moteur électrique (42) ; et
un couvercle (21) fixé à la paroi latérale du carter (11) depuis l'extérieur du carter (11) et recouvrant le composant haute tension (22), dans lequel :
le couvercle (21) est configuré pour être raccordé à un élément constitutif situé à l'extérieur du couvercle (21),
le dispositif d'entraînement (10) étant **caractérisé en ce que** le composant haute tension (22) est fixé à la paroi latérale du carter (11) via une pluralité de boulons et n'est pas directement fixé au couvercle (21).

2. Dispositif d'entraînement (10) selon la revendication 1, dans lequel le carter (11) loge le moteur électrique (42) et l'engrenage (32).

3. Dispositif d'entraînement (10) selon la revendication 1, dans lequel le carter (11) a un premier carter qui loge le moteur électrique (42) et un deuxième carter qui loge l'engrenage (32).

4. Dispositif d'entraînement (10) selon la revendication 2 ou 3, dans lequel le moteur électrique (42) est situé entre l'engrenage (32) et le composant haute tension (22) le long d'une direction axiale parallèle à un axe de rotation du moteur électrique (42).

5. Dispositif d'entraînement (10) selon la revendication 2 ou 3, dans lequel l'engrenage (32) est situé entre le moteur électrique (42) et le composant haute tension (22) le long d'une direction axiale parallèle à un axe de rotation du moteur électrique (42).

6. Dispositif d'entraînement (10) selon l'une quelconque des revendications 1 à 5, dans lequel le composant haute tension (22) est un onduleur et/ou un convertisseur courant continu/courant continu.

7. Dispositif d'entraînement (10) selon l'une quelconque des revendications 1 à 6, dans lequel le composant haute tension (22) est un composant avec une plage de tension de fonctionnement supérieure à 60 V CC jusqu'à 1500 V CC ou supérieure à 30 V CA jusqu'à 1000 V CA en valeur efficace.

8. Véhicule comprenant un dispositif d'entraînement (10) selon l'une quelconque des revendications 1 à 7, et un élément constitutif auquel le couvercle (21) est raccordé par le biais d'un support (60L), dans lequel l'élément constitutif comprend au moins l'un parmi un corps de véhicule du véhicule, un élément fixé au corps de véhicule et un élément de génération de vibrations.

9. Véhicule selon la revendication 8, comprenant en outre un élément de suspension arrière (8) auquel le couvercle (21) est raccordé par le biais du support (60L) et un bâti de support (50L) prévu dans l'élément de suspension arrière (8).

10. Véhicule selon la revendication 8 ou 9, comprenant en outre un compresseur (70) pour la climatisation auquel le couvercle (21) est raccordé par le biais du support (60L).

11. Véhicule comprenant un dispositif d'entraînement (10) selon l'une quelconque des revendications 1 à 7 et un moteur (80), dans lequel le moteur électrique (42) et le moteur (80) sont agencés le long d'une direction axiale parallèle à un axe de rotation du moteur électrique (42).

12. Véhicule selon l'une quelconque des revendications 8 à 10, dans lequel :
la paroi latérale du carter (11) s'étend dans une direction coupant un axe de rotation du moteur électrique (42) du carter (11) ; et
l'élément constitutif fait face à une surface externe de la paroi latérale.

13. Véhicule selon l'une quelconque des revendications 8 à 10, dans lequel :
la paroi latérale du carter (11) s'étend le long d'un axe de rotation du moteur électrique (42) du carter (11) ; et
l'élément constitutif fait face à une surface externe de la paroi latérale.
